# EUROPEAN PATENT SPECIFICATION

(11) **EP 2 515 672 B1**
(45) Date of publication and mention of the grant of the patent: **06.07.2016**
(21) Application number: 10809339.4
(22) Date of filing: 22.12.2010
(51) Int. Cl.: A23J 1/12, A23L 7/10, C08B 37/00

(54) **A METHOD OF PRODUCING BETA-GLUCAN, INSOLUBLE FOOD FIBRE AS WELL AS A PREPARATION OF OAT PROTEINS**
VERFAHREN ZUR HERSTELLUNG VON BETA-GLUCAN, UNLÖSLICHE NAHRUNGSMITTELFASER SOWIE HERSTELLUNG VON HAFERPROTEINEN
MÉTHODE DE PRODUCTION DE BÊTA-GLUCANE, FIBRE ALIMENTAIRE INSOLUBLE, ET PRÉPARATION DE PROTÉINES D'AVOINE

(30) Priority: 23.12.2009 PL 38999509
(43) Date of publication of application: 31.10.2012
(73) Proprietor: Wroclawski Park Technologiczny S.A., 54-414 Wroclaw (PL); Uniwersytet Ekonomiczny We Wroclawiu, 53-345 Wroclaw (PL); Przedsiebiorstwo Wielobranzowe "Futurum" SP. Z O.O., 42-200 Czestochowa (PL); Nazarkiewicz-Zajac, Dorota, 42-200 Czestochowa (PL); Grabowski, Piotr, 97-350 Gorzkowice (PL); Rawicki, Ryszard, 97-350 Gorzkowice (PL)
(72) Inventor: HARASYM, Joanna, PL-55-010 Swieta Katarzyna (PL); BRACH, Jerzy, PL-42-200 Czestochowa (PL); CZARNOTA, Jerzy Lech, PL-42-200 Czestochowa (PL); STECHMAN, Marta, PL-44-100 Gliwice (PL); SLABISZ, Andrzej, PL-42-200 Czestochowa (PL); KOWALSKA, Agnieszka, PL-50-009 Wroclaw (PL); CHOROWSKI, Maciej, PL-50-560 Wroclaw (PL); WINKOWSKI, Marek, PL-53-135 Wroclaw (PL); RAC , Józef, PL-55-093 Kielczów (PL); MADERA, Anna, PL-48-300 Nysa (PL)
(74) Representative: Witek, Rafal
(86) International application number: PCT/PL2010/050063
(87) International publication number: WO 2011/078711

(56) References cited:
- US-A- 4 028 468
- US-A- 4 089 848
- US-A- 5 312 636

## Description

The subject of the present invention is a method of producing beta-glucan, insoluble food fibre as well as a preparation of oat proteins. The present invention is useful in the food industry, for example as a dietary supplement. The present invention is also useful in the cosmetic and pharmaceutical industries.

Oats are an annual crop cultured by man for a long time. Uses are known for oat-based products in the pharmaceutical and cosmetic industries and in dietetics. Oats have a beneficial effect in the treatment of diabetes, obesity, atherosclerosis as well as colonic illness and animal nutrition.

Beta-glucan can be obtained from oats and from yeast. Research is known which suggests that beta-glucan can stimulate collagen regeneration. Uses are known for beta-1,3-D-glucans in cosmetics, in the production of cosmetic preparations that reduce the signs of aging in skin. An ability to heal wounds has also been disclosed for beta-1,3-D-glucan. Oat beta-glucans are also used as a frequent component of functional foods. The high viscosity of beta-glucans hinders the synthesis and absorption of cholesterol and fats, decreases the level of absorbed glucose and delays the appearance of the sugar peak. They decrease the effective calories and glycemic index of a meal. The valuable properties of oat beta-glucan are their prebiotic properties.

The significance of the soluble food fibre fraction, and particularly of beta-glucan contained in oats stems from its specific properties such as its ability to lower the cholesterol level, its effect in the treatment of obesity, its participation in the treatment of the inflammations of the bowel and stomach mucosa, increased immunity, as well as improved mood and self-awareness. Reports also exist of the use of beta-glucan in the treatment of oncological diseases, diabetes, wound healing and attenuation of dermitis. These properties make oat fibre a useful food additive. It is used most often in the production of cereal, dairy and meat products (Gibiński, Żywność. Nauka. Technologia.

Patent PL 177453 describes a non-derivative, water-soluble beta-(1-3)-glucan, a method of producing it and as well as a composition containing it.

The above patent description discloses neutral, water-soluble beta-glucans, which elicit strong and specific immunological effects without stimulation the production of some cytokines, as well as a preparation containing the novel beta-glucan as well as methods of producing them. The neutral, water-soluble preparation of beta-glucan exhibits a strong affinity for the beta-glucan receptor of human monocytes and activates two basic biological functions, (1) by increasing the antimicrobial activity of phagocytotic cells and (2) increasing the hematopoietic activity of monocytes, neutrophiles and platelets. In contrast to soluble glucans described in prior art, the neutral, soluble beta-glucan according to the invention neither induces nor releases the production of IL-10 nor TNFα, neither *in vitro,* nor *in vivo.* Safe and effective preparations of the neutral, water-soluble beta-glucan according to the present invention may be used in humans and animals in therapeutic or prophylactic procedures in order to increase the immune response without stimulating some biochemical mediators (such as IL-10, TNFα), which may cause such deleterious side effects as fever or inflammation.

Another disclosure, PL 194521, discloses a method of producing a composition of water-soluble beta-glucan, a composition of water-soluble beta-glucan as well as the use of such a composition. The above method relates to the production, from an oat flour fraction, of a water-soluble beta-glucan composition with a high mass ratio of beta-glucan/glukose, preferably at a ratio of 15:1 or above, and encompasses the use of beta-amylase at a rate sufficient to transform 50% by mass, preferably over 65% by mass, of the starch contained in the oat flour fraction into maltose. The enzymes pullulanase and/or protease can be used in conjunction with the beta-amylase. Appropriate compositions are also disclosed, which can be further transformed, as well as food products based on them.

Patent description P 354606 describes a method of producing a product from oats that has an increased beta-glucan content. This relates to a method of producing an oat product with enriched beta-glucan content, as well as a method of producing a food product containing such an enriched oat product. Husked or bare oats are used which are dry-ground and fractionated in multiple stages, without prior lipid removal. In the first stage, the oat material is dry-ground and classified in order to separate the coarser fraction containing seed cell walls and starch from the finer fraction. In the second stage, the abovementioned initially enriched fraction is dry-ground such that the pulverisation is more effective and then in the first stage and after dry classification, the coarser fraction containing the cell walls is separated from the finer fraction containing starch. The dry grinding may consist of grinding using rollers or hammering, and the dry classification may be sieving or pneumatic classification. A food article containing the enriched oat preparation may be a cereal product, meat, a ready-to-eat meal, drink or candy.

US5312636 A discloses a process for fractioning crops by using a combined dry and wet milling and extraction methods as well as the apparatus used to perform the process. The disclosed method comprises concentrating the bran fraction by elutriating with a mixture of water and alcohol at 75°C to 78°C; screening of the concentrated bran fraction using a sieve and suspending the bran fraction using a NaOH solution at a temperature of 70°C; extracting a viscous solution, acidified to a pH of 4.5 and precipitation of the protein; separating the protein by centrifugation; neutralising the pH of the supernatant to 7.0, and, adding ethanol or propanol for precipitation of beta-glucan; separating the beta-glucan, washing with 2-propanol and drying by evaporation.

US4028468 A presents the oat groat fractionation process wherein the oat groats are ground to form a coarse branny fraction, and a fine fraction. The coarse fraction is separated, formed into a slurry, and subjected to an extraction and separation process to isolate oat gum and oat protein together with other by-products. More specifically, the method for fractionating oat groats into oat bran, protein flour and oat gum comprises treating a bran with sodium carbonate at 40°C to 45°C, separating the bran using a centrifuge; chilling the liquid to 4°C; treating the recovered liquids with hydrochloric acid to precipitate proteins; neutralizing the gum solution with sodium hydroxide; separating the oat gum by centrifugation; treating the final gum with alcohol and vaccum drying the final gum product.

US 4 089 848 A describes a process for the extraction of food values from oats. Acid-soluble protein may be obtained by de-oiling comminuted groats, treating the de-oiled groats with an aqueous solution of pH 9.5-11.5, acidifying the alkaline solution after separation of insoluble material to a pH of 1.8-3.2, preferably 2.2-2.8, and separating acid-soluble protein from the acidified solution after separation of insoluble material. The disclosed process for the extraction of oat gum from oates in particular comprises de-oiling oat groats using hexane; adjusting the pH using sodium hydroxide; centrifuging the composition and decanting the supernatant liquid material from the solids; adjusting the pH to 2.6 using phosphoric acid to precipitate the protein, followed by centrifugation and precipitating the gum fraction using methanol. Each step in the process is controlled so as to minimize denaturing of acid-soluble protein. Techniques for separation of acid-soluble protein from the acidified solution are also disclosed. The separation of other protein products, bran, flour and gum is presented. The use of protein products as emulsifying agents is disclosed. US 4 089 848 A makes use of an innovative technology of isolating beta-glucans, oat proteins as well as a preparation of insoluble fibre from oat bran, designed for use on an industrial scale.

The subject of the present invention is the method of producing beta-glucan, insoluble food fibre and protein preparation from oat bran, encompassing the following steps:
- the raw material is transported into the container (ZM1), where water and ethanol are added from container (V1) via pump (P1), whereafter such a suspension is mixed at a temperature from 50°C to 100°C, preferably from 70°C to 80°C;
- cooling is performed using water from the cooling device (CH1) and the suspension is directed onto the vibrating sieve (SS1);
- the ethanol-containing filtrate from the sieve is sent to the ethanol recovery station (SW1), where the ethanol is distilled off, is then
   returned via pump (P2) to container (V1), and the ethanol-recovery broth is concentrate d by evaporating off excess water and the resulting broth is directed via pump (P3) to container (ZM3), whereas the concentrated bran fraction remaining on the sieve is directed to container (ZM2), where it is suspended in water and NaOH solution supplied by pump (P4) from container (V2), and then the suspension is mixed at a temperature of 50°C to 100°C, preferably from 70°C to 80°C;
- after cooling with water from the cooling device (CH1), the suspension is directed onto the vibrating sieve (SS2) via pump (P5) and the separated solids are directed to container (ZM3), where they are mixed with the broth, whereas the filtrate obtained from sieve (SS2) is directed to container (ZM4), where it is acidified using HCl, and the protein fraction is subsequently precipitated out;
- the liquid from container (ZM4) is directed by pump (P6) to the centrifuge (WO1), where the protein fraction is separated, which is then transferred onto the tray drier (ST1) and the protein is directed for apportionment following drying;
- the supernatant resulting from centrifugation is directed to container (ZM2), where it is neutralised by an addition of NaOH solution supplied via pump (P4) from container (V2) and then, after neutralisation, and addition of ethanol from container (V1) via pump (P1) causes the precipitation of beta-glucan in the container;
- the suspension is directed onto the vibrating sieve (SS2) via pump (P5), where the separated, solid beta-glucan is directed to container (ZM5), where it is suspended in a small quantity of ethanol supplied from container (V1) via pump (P1), and then pump (P7) directs it to the spray drier (SR1), whereafter it is further directed for apportionment;
- the filtrate obtained from sieve (SS2), containing ethanol is directed do the alcohol recovery station (SW1), where the ethanol is distilled off, which is then returned via pump (P2) to container (V1), and then the ethanol recovery broth is concentrated via the evaporation of water and such a resulting liquid is directed via pump (P3) to container (ZM3), where it is mixed with the remaining components, and the resulting suspension is directed via pump (P8) to the tray drier (ST1), where the dried preparation of insoluble food fibre is directed for apportionment.

### Detailed description

The subject of the present invention is a method of producing nutritional substance, beta-glucan, insoluble food fibre as well as a preparation of oat proteins from bran, encompassing the following process:
In order to obtain the desired substances from the oat bran, the raw material is transferred into receiver ZM1, where water and ethanol are added from tank V1 using pump P1, where after the resulting suspension is mixed at a temperature from 50°C to 100°C, preferably from 70°C to 80°C.

After cooling with water from the cooling device CH1, the suspension is directed onto vibrating sieve SS1.

The ethanol-containing filtrate is directed to the ethanol recovery station SW1, where the ethanol is distilled off and returned via pump P2 to container V1, and the broth from ethanol recovery is concentrated by evaporating off excess water. The resulting broth is directed via pump P3 to container ZM3, whereas the concentrated bran fraction remaining on the sieve is directed into container ZM2, where it is suspended in water and the NaOH solution supplied via pump P4 from container V2, and then the suspension is mixed at a temperature of 50°C to 100°C, preferably from 70°C to 80°C.

After cooling with water from the cooling device CH1, the suspension is directed onto the vibrating sieve SS2 via pump P5. The separated solids are directed into container ZM3, where they are mixed with the broth, and the filtrate from sieve SS2 is directed into container ZM4, where it is acidified by an addition of HCl, and then the protein fraction is precipitated out. The liquid from container ZM4 is directed via pump P6 to centrifuge WO1, where the protein fraction is separated out, where after it is transferred to tray drier ST1. The proteins are apportioned for sale following drying.

The supernatant resulting from centrifugation is directed to container ZM2, where it is neutralised using the NaOH solution supplied by pump P4 from container V2. The ethanol addition from container V1 via pump P1 following neutralisation causes beta-glucan to precipitate in the container.

The suspension is directed onto vibrating sieve SS2 via pump P5, from where the separated solid beta-glucan is directed into container ZM5, where it is suspended in a small quantity of ethanol from container V1 via pump P1, and then pump P7 directs it into spray drier SR1, from where it is directed into apportionment. The filtrate resulting from sieve SS2, containing ethanol, is directed to the ethanol recovery station SW1, where the ethanol is distilled off, which is then returned via pump P2 to container V1. The broth from ethanol recovery is concentrated by evaporating of excess water. The resulting liquid is directed via pump P3 to container ZM3, where it is mixed with the remaining components. The resulting suspension is directed via pump P8 to the tray drier ST1, from where the dried preparation of insoluble food fibre is sent for apportionment.

In one embodiment, the supervision of the entire process of production takes place from an operator's workstation containing appropriate visualisation programming. All signals from the object are transferred via a higher priority controller in a special room near the production installation. This contains a UPS of sufficient capacity to maintain the power to this controller for a time sufficient to safely halt the process in the event of a power outage. The control system has a distributed structure; the higher priority controller interacts with all the controllers distributed throughout the installation.

Furthermore, all of the devices used in the installation that come into contact with the raw materials or products should be permitted for contact with food as well as being completely inert to the activity of such substances.

All elements of the equipment located in areas of explosive hazards should be manufactured to the Ex standard (anti-explosive). Preferably, all mixers set on tensometric scales should be suspended on three mounting brackets. All tanks that are to contain excise-bound substances (ethanol), should have certificates issued by the central registry authorities.

All technical piping (except for steam and condensate and cooling water piping) should preferably be manufactured of acid-resistant steel designed for food production. All of the blocking armature (manual and automatic) should consist of ball valves made of acid-resistant steel. The piping should be mounted on the load-bearing members of the station as well as the production hall. All of the flange connections as well as threaded technical piping that transports hazardous flammable media, such as ethanol, are designed with bridges that have a cross-sectional area of at least 16 mm² according to a standard used for ethanol dehydration installations (flatirons welded near flange connectors, made of acid-resistant steel, 100x20x2,5 cm on a side with a 10mm perforation drilled into one end, connected with a LYżo 16 line with crimped copper ends). All piping leading to and from mixers mounted on weigh scales are connected thereto through compensators.

A list of devices and technical apparatus, preferably used in technological lines for the production of β-glucan, insoluble fibre as well as a preparation of oat proteins is shown in Table 1:

**Table 1**

| **No.** | **Technical designation** | **Name of device** |
|---|---|---|
| **1.** | ZM1 | Container with agitator, heating jacket and return cooler |
| **2.** | ZM2 | Container with agitator and heating jacket |
| **3.** | ZM3 | Container with agitator |
| **4.** | ZM4 | Container with agitator |
| **5.** | ZM5 | Container with agitator |
| **6.** | SS1 | Vibrating sieve |
| **7.** | SS2 | Vibrating sieve |
| **8.** | ST1 | Tray dryer |
| **9.** | SR1 | Spray dryer |
| **10.** | CH1 | Cooler, cold water device |
| **11.** | SW1 | Evaporation station |
| **12.** | WO1 | Centripetal centrifuge |
| **13.** | V1 | Storage container for pure ethanol |
| **14.** | V2 | 20% lye container |
| **15.** | P1 | Pure ethanol pump |
| **16.** | P2 | Distillate transfer pump |
| **17.** | P3 | Post-distillation broth transfer pump |
| **18.** | P4 | Lye pump |
| **19.** | P5 | Transfer pump |
| **20.** | P6 | Transfer pump |
| **21.** | P7 | Transfer pump |
| **22.** | P8 | Transfer pump |

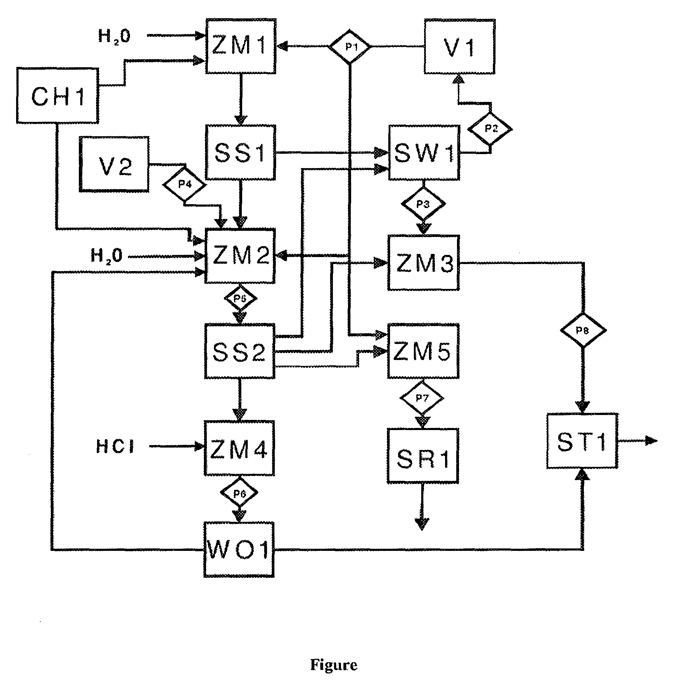

## Claims

1. A method of producing beta-glucan, insoluble food fibre and protein preparation from oat bran, encompassing the following steps:
- the raw material is transported into the container (ZM1), where water and ethanol are added from container (V1) via pump (P1), whereafter such a suspension is mixed at a temperature from 50°C to 100°C, preferably from 70°C to 80°C;
- cooling is performed using water from the cooling device (CH1) and the suspension is directed onto the vibrating sieve (SS1);
- the ethanol-containing filtrate from the sieve is sent to the ethanol recovery station (SW1), where the ethanol is distilled off, is then
returned via pump (P2) to container (V1), and the ethanol-recovery broth is concentrate d by evaporating off excess water and the resulting broth is directed via pump (P3) to container (ZM3), whereas the concentrated bran fraction remaining on the sieve is directed to container (ZM2), where it is suspended in water and NaOH solution supplied by pump (P4) from container (V2), and then the suspension is mixed at a temperature of 50°C to 100°C, preferably from 70°C to 80°C;
- after cooling with water from the cooling device (CH1), the suspension is directed onto the vibrating sieve (SS2) via pump (P5) and the separated solids are directed to container (ZM3), where they are mixed with the broth, whereas the filtrate obtained from sieve (SS2) is directed to container (ZM4), where it is acidified using HCl, and the protein fraction is subsequently precipitated out;
- the liquid from container (ZM4) is directed by pump (P6) to the centrifuge (WO1), where the protein fraction is separated, which is then transferred onto the tray drier (ST1) and the protein is directed for apportionment following drying;
- the supernatant resulting from centrifugation is directed to container (ZM2), where it is neutralised by an addition of NaOH solution supplied via pump (P4) from container (V2) and then, after neutralisation, and addition of ethanol from container (V1) via pump (P1) causes the precipitation of beta-glucan in the container;
- the suspension is directed onto the vibrating sieve (SS2) via pump (P5), where the separated, solid beta-glucan is directed to container (ZM5), where it is suspended in a small quantity of ethanol supplied from container (V1) via pump (P1), and then pump (P7) directs it to the spray drier (SR1), whereafter it is further directed for apportionment;
- the filtrate obtained from sieve (SS2), containing ethanol is directed do the alcohol recovery station (SW1), where the ethanol is distilled off, which is then returned via pump (P2) to container (V1), and then the ethanol recovery broth is concentrated via the evaporation of water and such a resulting liquid is directed via pump (P3) to container (ZM3), where it is mixed with the remaining components, and the resulting suspension is directed via pump (P8) to the tray drier (ST1), where the dried preparation of insoluble food fibre is directed for apportionment.

## Patentansprüche

1. Verfahren zur Herstellung von beta-Glucan, unlöslichen Nahrungsmittelfasern und der Proteinpräparation von Haferkleie, umfassend die folgenden Schritte:
- das Rohmaterial wird in den Behälter (ZM1) transportiert, wo Wasser und Ethanol vom Behälter (V1) über eine Pumpe (P1) hinzugefügt werden, wonach solch eine Suspension bei einer Temperatur von 50°C bis 100°C, bevorzugt von 70°C bis 80°C, gemischt wird;
- eine Kühlung wird unter der Verwendung von Wasser aus der Kühlvorrichtung (CH1) durchgeführt, und die Suspension wird auf das Rüttelsieb (SS1) gerichtet;
- das Ethanol-enthaltende Filtrat von dem Sieb wird zur Ethanol-Rückgewinnungsstation (SW1) geschickt, wo das Ethanol abdestilliert wird, und wird dann über die Pumpe (P2) zum Behälter (V1) rückgeführt, und das Ethanol-Rückgewinnungsmedium wird durch Verdampfen von überschüssigem Wasser konzentriert, und das sich ergebende Medium wird über die Pumpe (P3) zum Behälter (ZM3) gerichtet, wohingegen die konzentrierte Kleiefraktion, die auf dem Sieb verbleibt, in den Behälter (ZM2) gerichtet wird, wo sie in einer Wasser und NaOH Lösung suspendiert wird, die durch Pumpe (P4) von Behälter (V2) zugeführt wird, und dann wird die Suspension bei einer Temperatur von 50°C bis 100°C, bevorzugt von 70°C bis 80°C gemischt;
- nach Kühlung mit Wasser aus der Kühlvorrichtung (CH1) wird die Suspension über die Pumpe (P5) auf das Rüttelsieb (SS2) gerichtet, und die getrennten Feststoffe werden zum Behälter (ZM3) gerichtet, wo sie mit dem Medium gemischt werden, wohingegen das Filtrat, das von dem Sieb (SS2) erhalten wurde zu dem Behälter (ZM4) gerichtet wird, wo es unter der Verwendung von HCl angesäuert wird, und die Proteinfraktion anschließend ausgefällt wird;
- die Flüssigkeit von Behälter (ZM4) wird durch die Pumpe (P6) zu der Zentrifuge (WO1) gerichtet, wo die Proteinfraktion getrennt wird, die dann auf den Hordentrockner (ST1) transferiert wird, und das Protein wird nach dem Trocknen zur Portionierung gerichtet;
- der von der Zentrifugation resultierende Überstand wird zu Behälter (ZM2) gerichtet, wo er durch eine Zugabe von NaOH Lösung neutralisiert wird, die über die Pumpe (P4) vom Behälter (V2) zugeführt wird, und dann, nach Neutralisierung und Zugabe von Ethanol aus dem Behälter (V1) über die Pumpe (P1) die Ausfällung von beta-Glucan in den Behälter verursacht;
- die Suspension wird über die Pumpe (P5) auf das Rüttelsieb (SS2) gerichtet, wo das abgetrennte feste beta-Glucan zu Behälter (ZM5) gerichtet wird, wo es in einer kleinen Menge Ethanol suspendiert wird, die von Behälter (V1) über die Pumpe (P1) geliefert wird, und dann richtet die Pumpe (P7) es zum Sprühtrockner (SR1), wonach es weiter zur Portionierung gerichtet wird;
- das von Sieb (SS2) erhaltene Filtrat, das Ethanol enthält, wird zu der Alkohol-Rückgewinnungsstation (SW1) gerichtet, wo das Ethanol abdestilliert wird, was dann über die Pumpe (P2) zu Behälter (V1) rückgeführt wird, und dann wird das Ethanol-Rückgewinnungsmedium über die Verdampfung von Wasser konzentriert und solch eine sich ergebende Flüssigkeit wird über die Pumpe (P3) zu Behälter (ZM3) gerichtet, wo sie mit den verbliebenen Komponenten gemischt wird, und die sich ergebende Suspension wird über die Pumpe (P6) zu dem Hordentrockner (ST1) gerichtet, wo die getrocknete Präparation von unlöslichen Nahrungsmittelfasern zur Portionierung gerichtet wird.

## Revendications

1. Méthode de production de bêta-glucane, de fibres alimentaires insolubles et d'une préparation de protéines à partir de son d'avoine, englobant les étapes suivantes :
- la matière brute est transportée dans le conteneur (ZM1), où de l'eau et de l'éthanol sont ajoutés à partir du conteneur (V1) via une pompe (P1), après quoi une telle suspension est mélangée à une température allant de 50°C à 100°C, préférablement de 70°C à 80°C ;
- un refroidissement est effectué en utilisant de l'eau issue du dispositif de refroidissement (CH1) et la suspension est dirigée vers le tamis à secousses (SS1) ;
- le filtrat contenant l'éthanol issu du tamis est envoyé vers la station de récupération d'éthanol (SW1), où l'éthanol est distillé, est ensuite renvoyé via la pompe (P2) vers le conteneur (V1), et le bouillon de récupération d'éthanol est concentré par l'évaporation de l'excès d'eau et le bouillon résultant est dirigé via la pompe (P3) vers le conteneur (ZM3), tandis que la fraction de son concentrée restant sur le tamis est dirigée vers le conteneur (ZM2), où elle est mise en suspension dans de l'eau et une solution de NaOH fournie par la pompe (P4) à partir du conteneur (V2), puis la suspension est mélangée à une température allant de 50°C à 100°C, préférablement de 70°C à 80°C ;
- après refroidissement par de l'eau issue du dispositif de refroidissement (CH1), la suspension est dirigée vers le tamis à secousses (SS2) via la pompe (P5) et les matières solides séparées sont dirigées vers le conteneur (ZM3), où elles sont mélangées avec le bouillon, tandis que le filtrat obtenu à partir du tamis (SS2) est dirigé vers le conteneur (ZM4), où il est acidifié à l'aide de HCl, et la fraction de protéines est ensuite précipitée ;
- le liquide issu du conteneur (ZM4) est dirigé par la pompe (P6) vers la centrifugeuse (WO1), où la fraction de protéines est séparée, laquelle est ensuite transférée sur le séchoir à plateaux (ST1) et la protéine est dirigée à des fins de répartition après séchage ;
- le surnageant résultant de la centrifugation est dirigé vers le conteneur (ZM2), où il est neutralisé par une addition d'une solution de NaOH fournie via la pompe (P4) à partir du conteneur (V2) puis, après neutralisation, une addition d'éthanol à partir du conteneur (V1) via la pompe (P1) provoque la précipitation de bêta-glucane dans le conteneur ;
- la suspension est dirigée vers le tamis à secousses (SS2) via la pompe (P5), où le bêta-glucane solide séparé est dirigé vers le conteneur (ZM5), où il est mis en suspension dans une petite quantité d'éthanol fournie à partir du conteneur (V1) via la pompe (P1), puis la pompe (P7) le dirige vers le séchoir-atomiseur (SR1), après quoi il est davantage dirigé à des fins de répartition ;
- le filtrat obtenu à partir du tamis (SS2), contenant de l'éthanol, est dirigé vers la station de récupération d'alcool (SW1), où l'éthanol est distillé, lequel est ensuite renvoyé via la pompe (P2) vers le conteneur (V1), puis le bouillon de récupération d'éthanol est concentré par l'évaporation de l'eau et un tel liquide résultant est dirigé via la pompe (P3) vers le conteneur (ZM3), où il est mélangé avec les composants restants, et la suspension résultante est dirigée via la pompe (P8) vers le séchoir à plateaux (ST1), où la préparation séchée de fibres alimentaires insolubles est dirigée à des fins de répartition.
